# EUROPÄISCHE PATENTSCHRIFT

(11) **EP 1 960 852 B1**
(45) Veröffentlichungstag und Bekanntmachung des Hinweises auf die Patenterteilung: **20.01.2010**
(21) Anmeldenummer: 06819560.1
(22) Anmeldetag: 16.11.2006
(51) Int. Cl.: G05B 19/4062, G05B 9/02, G01B 7/00

(54) **Überwachungseinrichtung für eine Antriebseinrichtung**
MONITORING DEVICE FOR A DRIVE DEVICE
DISPOSITIF DE CONTRÔLE POUR UN DISPOSITIF D'ENTRAÎNEMENT

(30) Priorität: 16.12.2005 DE 102005060352; 29.09.2006 DE 102006046283; 29.09.2006 DE 102006046286
(43) Veröffentlichungstag der Anmeldung: 27.08.2008
(73) Patentinhaber: SIEMENS AKTIENGESELLSCHAFT, 80333 München (DE)
(72) Erfinder: SCHWESIG, Günter, 91054 Erlangen (DE)
(86) Internationale Anmeldenummer: PCT/EP2006/068584
(87) Internationale Veröffentlichungsnummer: WO 2007/068550

(56) Entgegenhaltungen:
- EP-A2- 0 658 832
- DE-A1- 2 448 239
- DE-B- 1 132 803
- DE-U1- 20 122 389
- JP-A- 57 116 209
- US-A- 4 115 958
- US-A- 4 524 313
- US-A- 4 608 797
- US-A- 4 807 153
- US-A- 6 071 477

## Beschreibung

Die vorliegende Erfindung betrifft eine Überwachungseinrichtung für eine Antriebseinrichtung, um Fehler eines Gebers der Antriebseinrichtung zu erkennen. Dieser Fehler kann insbesondere im Stillstand der Antriebseinrichtung wie auch während einer Verfahrbewegung der Antriebseinrichtung auftreten.

Es gibt Maschinenteile, z.B. ein Schrägbett bei einer Drehmaschine oder ein Aufzugskorb bei einem normalen Förderzeug, die mittels üblicher elektrischer Antriebseinrichtungen angetrieben werden und bei denen der Zustand "hängende Last" auftreten kann. Die elektrische Antriebseinrichtung weist dabei zumindest eine elektrische Maschine auf, welche motorisch wie insbesondere auch generatorisch betreibbar ist. Im Zustand der "hängenden Last" ist vom Antrieb, also von der elektrischen Maschine, ein Mindestmoment aufzubringen, um der Schwerkraft, welche die Last nach unten zieht, entgegen zu wirken. Hierfür weist der Antrieb beispielsweise einen Stromrichter zur Speisung der elektrischen Maschine auf. Die elektrische Maschine, kann jedoch als Antriebseinrichtung auch direkt an eine Versorgungsspannung angeschlossen werden.

Bei einem Ausfall oder einem sonstigen Fehler der elektrischen Antriebseinrichtung kann diese das erforderliche Moment nicht aufbringen. Wenn keine weiteren Maßnahmen ergriffen würden, könnte beispielsweise ein Aufzugkorb herunterfallen und gegebenenfalls Personen und Gegenstände gefährden.

Zum Schutz vor derartigen Gefährdungen sind Sicherheitseinrichtungen bekannt, z.B. lüftbare Bremsen, die im Fehlerfall und bei Netzausfall eingreifen und die hängende Last in einen sicheren Zustand überführen. Zur Erkennung derartiger Fehler können z.B. mehrkanalige, redundante Sicherheitssysteme und Komponenten eingesetzt werden, die das Auslösen einer oder mehrerer Sicherheitseinrichtungen herbeiführen. Derartige Sicherheitseinrichtungen sind nicht nur vorteilhaft im Stand der Antriebseinrichtung genutzt, sondern auch in deren Betrieb.

Das Herbeiführen des Überführens in den sicheren Zustand kann natürlich nur dann erfolgen, wenn ein aufgetretener Fehler auch erkannt wird. Abhängig von der Ausführung und dem Anwendungsfall muss der Fehler dabei entsprechend schnell erkannt werden. Die Ausführung betrifft dabei insbesondere die Mechanik einer Maschine, wobei hierbei beispielsweise Übersetzungsverhältnisse von Getrieben mit einwirken können.

Es existieren Fehler, die nicht unmittelbar erkannt werden können bzw. zu deren Erkennung aufwändige Zusatzmaßnahmen erforderlich wären. Beispiele derartiger Fehler sind:
- ein Bruch der Geberwelle, d.h. der drehfesten Verbindung zwischen Antriebseinrichtung und einer Gebereinrichtung (Geber), welche eine Istlage oder eine Ist-Drehzahl der Antriebseinrichtung erfasst,
- Fehlfunktionen im Gebersystem selbst, die scheinbar ordnungsgemäße Signale bewirken.

Derartige Fehler können bei einer einkanaligen Gebereinrichtung nicht erkannt werden. Beispielsweise können in einem Fehlerfall Gebersignale einen statischen Zustand einnehmen, d.h. die Signale des Gebers sind zwar korrekt, folgen jedoch einer Bewegung der Antriebseinrichtung, da beispielsweise ein Fehler im Gebersystem oder ein Fehler in einer Kupplungseinrichtung zwischen dem Geber und der Antriebseinrichtung vorliegt. Der Bruch einer Geberwelle bedeutet beispielsweise, dass ein Kraftschluss zwischen einer Motorwelle und einer Geberwelle verloren geht. Neben dieser Möglichkeit eines Geberwellenbruchs gibt es jedoch auch noch weitere, wie den Verlust des Kraftschlusses zwischen der Geberwelle und einer Codescheibe des Gebers. Die Codescheibe des Gebers dient der Generierung von Gebersignalen und wird häufig auch als Geberscheibe bezeichnet.

Als Geber sind beispielsweise Lagegeber, Geschwindigkeitsgeber oder auch Beschleunigungsgeber bekannt. Zur Lage-, Positions-, Geschwindigkeit's-, Drehzahlerfassung können Geber eingesetzt werden, welche zwei um 90° versetzte sinusförmige oder rechteckförmige Signale generieren. Aus diesen Signalen kann die Lage bzw. die Drehzahl ermittelt werden. Werden diese Gebersignale statisch oder bricht die Geberwelle und steht die Antriebseinrichtung, d.h. der elektrische Motor im aktiven Stillstand (Moment wird gegen Gewichtskraft aufgebracht, Drehzahl ist Null), so frieren die Gebersignale (Gebergrößen) unbemerkt ein. Lage- und Drehzahlregler würden sich dann in einem "open loop"-Betrieb befinden. Damit wäre insbesondere ein Regelkreis für eine Lage-, Geschwindigkeits- und/oder Beschleunigungsregelung geöffnet, so dass kein geregelter Betrieb mehr durchführbar ist. Die Antriebseinrichtung befindet sich dann in einem labilen Zustand. Kleinste Störmomente könnten dann beispielsweise bei einem Hebezeug zu einem Absturz einer Last führen.

Während des Betriebs einer Maschine wird eine dieser zugeordnete Antriebseinrichtung beispielsweise immer wieder von einer Position in eine andere verfahren. Dabei können die angenommenen Fehler durch Beobachten bestimmter Regelgrößen erkannt werden. Da dies sehr aufwändig ist und das Risiko des Geberwellenbruchs bzw. des Statisch-werdens der Gebersignale als zumeist sehr gering eingeschätzt wird, unterbleiben oftmals derartige zusätzliche Maßnahmen zur Überwachung.

Aus der US 4,115,958 A ist eine Überwachungseinrichtung für eine Antriebseinrichtung bekannt, welche zur Überwachung einer Bewegung der Antriebseinrichtung vorgesehen ist. Die Überwachungseinrichtung weist einen ersten und einen zweiten Geber auf, wobei der zweite Geber zur Überwachung des ersten Gebers vorgesehen ist.

Aus der US 4,807,153 A ist eine Überwachungseinrichtung für eine Antriebseinrichtung bekannt, welche zur Überwachung einer Bewegung der Antriebseinrichtung vorgesehen ist. Die Überwachungseinrichtung weist einen Geber auf. Weiterhin werden der Motorstrom und die Klemmenspannung eines Motors der Antriebseinrichtung erfasst. Anhand des Motorstroms, der Klemmenspannung und motorspezifischer Kenngrößen (Widerstand und Induktivität) wird ein Schätzwert für eine Motordrehzahl ermittelt, so dass die mittels des Gebers ermittelte Motordrehzahl auf Plausibilität geprüft werden kann.

Aus der EP 0 658 832 A ist ein Geber bekannt, der einerseits ein Inkrementalsignal und andererseits ein Absolutsignal liefert, so dass die beiden Signale gegenseitig auf Plausibilität überprüfbar sind.

Aus der US 6,071,477 A ist bekannt, einen Schrittmotor über eine Kupplung mit einer angetriebenen Welle zu verbinden. Die Drehstellung der Welle wird mittels eines Encoders erfasst.

Zur Erfüllung bestimmter Sicherheitsnormen ist das qualitative Schätzen von Ausfallrisiken jedoch nicht mehr ausreichend. Daher ist es die Aufgabe der vorliegenden Erfindung, eine Überwachungseinrichtung für eine Antriebseinrichtung anzugeben, mittels derer eine erhöhte Sicherheit erzielbar ist, wobei insbesondere auf eine einfache Realisierung dieser Maßnahmen zu achten ist. Da die Wahrscheinlichkeit eines Geberwellenbruchs und das Statisch-werden der Gebersignale kaum zu berechnen ist und aus Gründen des Aufwandes vermieden werden sollte, dass der Geber selbst in eine Quantifizierung aufgenommen werden muss, besteht die Notwendigkeit, auch diese sehr unwahrscheinlichen Fehlerquelle erkennen zu können. Beispielsweise wird durch die neue Sicherheitsnorm IEC 61508 bei der Sicherheitsbetrachtung auch eine qualifizierte Ausfall-Wahrscheinlichkeitsberechnung verlangt, welche die quantitative Beurteilung der Fehlerwahrscheinlichkeit nötig macht.

Die Aufgabe der Erfindung wird zunächst mittels einer Überwachungseinrichtung für eine Antriebseinrichtung zur Erkennung eines fehlerhaften Gebersignals mit den Merkmalen nach Anspruch 1 gelöst. Die abhängigen Ansprüche 2 bis 5 betreffen vorteilhafte erfinderische Weiterbildungen der Erfindung.

Die Aufgabe der Erfindung wird gelöst mittels einer Überwachungseinrichtung für eine Antriebseinrichtung, welche zur Überwachung einer Bewegung der Antriebseinrichtung vorgesehen ist, wobei die Überwachungseinrichtung einen ersten Geber und einen zweiten Geber aufweist, wobei der zweite Geber zur Überwachung des ersten Gebers vorgesehen ist. Der erste Geber ist mittels einer Kupplung mit einer Motorwelle mechanisch gekuppelt. Die Kupplung weist eine Antriebsseite und eine Abtriebsseite auf. Der erste Geber ist der Abtriebsseite und der zweite Geber der Antriebsseite der Kupplung zugeordnet.

In einer vorteilhaften Ausgestaltung der Überwachungseinrichtung weist der erste Geber eine Geberscheibe auf, die mit einer Geberwelle eine formschlüssige Verbindung eingeht. Durch die Ausbildung der formschlüssigen Verbindung sind Fehler aufgrund von gelösten Verbindungen zwischen Geberscheibe und Geberwelle, welche beispielsweise nur mittels einer Klebeverbindung hergestellt ist, reduzierbar.

Beim abtriebsseitig angeordneten Geber handelt es sich vorzugsweise um einen Geber mit einer hohen Genauigkeit gegenüber dem Geber, welcher auf der Antriebsseite der Kupplung angeordnet ist.

Zur.Reduzierung der Ausfallwahrscheinlichkeit der Überwachungseinrichtung ist es weiterhin vorteilhaft, dass die Antriebsseite der, Kupplung mit einer Motorwelle eine formschlüssige Verbindung eingeht. Diese formschlüssige Verbindung ist beispielsweise mittels einer Nut-Feder-Kombination realisierbar.

Vorteilhaft ist es beispielsweise auch, dass der erste und der zweite Geber in einem gemeinsamen Gehäuse positioniert sind. Dadurch reduziert sich die Fehlerwahrscheinlichkeit, und eine Kapselung der Geber ist weniger aufwändig zur realisieren.

Weitere Vorteile und Einzelheiten ergeben sich aus der nächfolgenden Beschreibung von Ausführungsbeispielen in Verbindung mit den Zeichnungen. Dabei zeigen in Prinzipdarstellung:
- FIG 1: eine Überwachungseinrichtung, welche zwei Geber aufweist,
- FIG 2: einen Signalfluss bei einem Überwachungsverfahren zur Überwachung eines fehlerhaften Gebersignals ei- ner Antriebseinrichtung und
- FIG 3: ein Anwendungsbeispiel für- eine Antriebseinrich- tung.

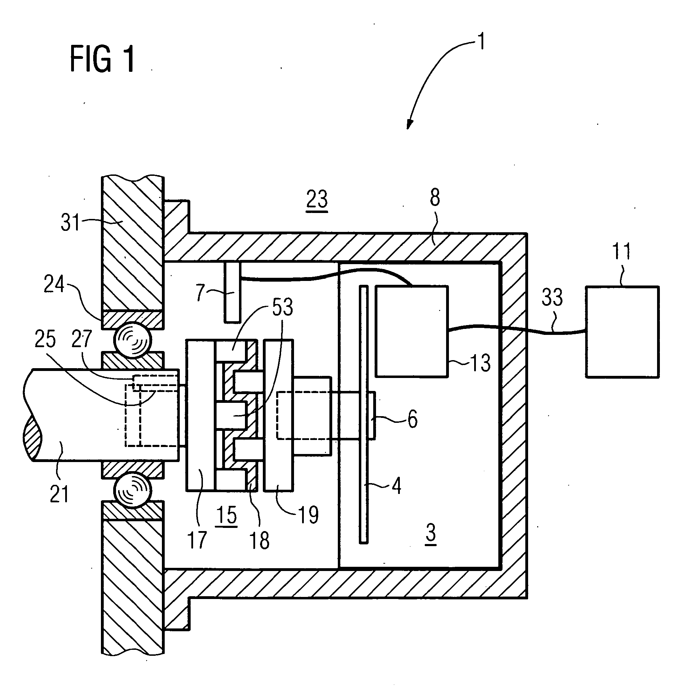

Die Darstellung gemäß Figur 1 zeigt eine Antriebseinrichtung 1. Die Antriebseinrichtung 1 weist eine elektrische Maschine auf, von welcher in Figur 1 lediglich der Lagerschild 31 (bedienseitiger Lagerschild einer elektrischen Maschine), ein Lager 24, welches ein Motorlager darstellt, und eine Motorwelle 21 dargestellt sind. Des Weiteren zeigt die Darstellung gemäß Figur 1 einen ersten Geber 3 und einen zweiten Geber 7. Der erste Geber 3 weist eine Geberwelle 6, eine Geberscheibe 4 (Codescheibe) und eine Signalverarbeitungseinrichtung 13 auf. Die Signalverarbeitungseinrichtung 13 ist zur Verarbeitung der Signale vorgesehen, welche mittels der Codescheibe (Geberscheibe) 4 generierbar sind. Die Geberscheibe 4 ist auf die Geberwelle 6 gesetzt, wobei die Geberwelle 6 mit einer Kupplung 15 mechanisch verbunden ist. Die mechanische Verbindung ist beispielsweise ein Pass- bzw. ein Presssitz. Die Geberscheibe 4 ist vorteilhafterweise mittels einer nicht dargestellten formschlüssigen Verbindung mit der Geberwelle 6 mechanisch gekoppelt. Die Kupplung 15 weist eine Antriebsseite 17 und eine Abtriebsseite 19 auf. Die Antriebsseite 17 und die Abtriebsseite. 19 sind mittels eines elastischen Verbindungsteils 18 miteinander mechanisch gekoppelt. Die Antriebsseite 17 ist dasjenige Kupplungsteil, welches eine motorseitige mechanische Verbindung mit der Motorwelle 21 eingeht. Eine derartige mechanische Verbindung ist beispielsweise mittels einer Nut-Feder-Verbindung realisierbar. Gemäß der Ausbildung nach Figur 1 können die Nut 25 und die Feder 27 der Nut-Feder-Verbindung in die Motorwelle 21 integriert sein. Die Abtriebsseite 19 der Kupplung 15 betrifft das geberseitige Kupplungsteil. Dieses geberseitige Kupplungsteil ist mechanisch mit der Geberwelle 6 verbunden. Mittels des ersten Gebers 3 lässt sich eine Drehbewegung bzw. eine Position des Abtriebsteils 19 der Kupplung 15 erfassen. Mittels des zweiten Gebers 7 lässt sich eine Bewegung des motorseitigen Kupplungsteils, also der Antriebsseite 17 der Kupplung 15 erfassen. Dies geht beispielsweise kostengünstig mittels eines magnetischen Sensors, welcher Klauen einer Klauenkupplung detektiert. Vorteilhaft ist der zweite Geber 7 datentechnisch mit dem ersten Geber 3 verbunden. In der Signalverarbeitungseinrichtung 13 lässt sich dann das Gebersignal des ersten Gebers 3 zum Gebersignal des zweiten Gebers 7 auswerten. Ein Auswertesignal kann beispielsweise mittels eines Datenkabels 33, welches eine datentechnische Verbindung zu einer Steuerungs- und/oder Regelungseinrichtung 11 ermöglicht, übermittelt werden. In einer weiteren Ausgestaltung erfolgt der Vergleich der Signale des ersten und zweiten Gebers 3, 7 in der Steuerungs- und/oder Regelungseinrichtung 11 selbst, wobei eine datentechnische Verbindung direkt oder indirekt zu dieser Steuerungs- und/oder Regelungseinrichtung 11 besteht. Diese Variante ist in der Figur 1 jedoch nicht explizit dargestellt.

Mittels einer dargestellten Überwachungseinrichtung für eine Antriebseinrichtung 1 lässt sich die im Stand der Technik bestehende Überwachungslücke der Antriebseinrichtung 1 und damit eine verbesserte Fehlerüberwachung realisieren. Dies ist unabhängig davon, ob als Kupplung eine elastische Kupplung (z.B. Klauenkupplung) oder eine starre Kupplung mit der Motorwelle 21 realisiert ist.

Die Geberscheibe .(Codescheibe) 4 wird nach dem Stand der Technik meist mit der Geberwelle 6 verklebt. Erfindungsgemäß wird die Geberscheibe 4 in einer Ausführung jedoch formschlüssig mit der Geberwelle 6 verbunden, da so beispielsweise ein erfolgter Kraftschluss zwischen der Geberwelle 6 und der Geberscheibe 4 über eine Klemmeinrichtung, eine Presspassung oder dergleichen zusätzlich verbessert werden kann. Ein Beispiel für eine formschlüssige Verbindung ist eine Nut-Feder-Verbindung.

Es können vorteilhaft drei Stellen bezüglich ihres Fehlerverhaltens verbessert werden. Dies ist zum einen die Verbindung zwischen der Antriebsseite der Kupplung 15 und der Motorwelle 21 und zum anderen die gegenüberliegende Abtriebsseite der Kupplung 15, also die Verbindung zwischen dem ersten Geber 3 und der Kupplung 15, wie auch drittens die Verbindung der Geberscheibe 4 in Bezug auf die Geberwelle 6. Derartige Verbindungen können vorteilhaft formschlüssig ausgebildet werden. Die Verwendung formschlüssiger Verbindungen in diesen Bereichen ist unabhängig von der Verwendung eines ersten und eines zweiten Gebers 3, 7

Gemäß der Darstellung nach Figur 1 ist lediglich eine formschlüssige Verbindung der Motorwelle 21 mit der Antriebsseite 17 der Kupplung 15 vorgesehen. Zusätzlich werden Klauen 53 des antriebsseitigen Kupplungsteils mit einem einfachen magnetischen Sensor, im vorliegenden Beispiel dem zweiten Geber 7, abgetastet. Es entstehen damit zusätzliche Positionssignale. Zu der Position, an der diese Signale erzeugt werden, gibt es bezüglich der Position, die im ersten Geber 3 erzeugt wird, eine Erwartungshaltung. Wird die Erwartungshaltung nicht erfüllt, so liegt ein Fehler in Form von z.B. einem Geberwellenbruch oder einem statisch gewordenen Gebersignal vor. Das Überprüfen der Erfüllung der Erwartungshaltung kann entweder in der Elektronik des ersten Gebers 3, also in der Signalverarbeitungseinrichtung 13, oder in der Steuerungs- und/oder Regelungseinrichtung 11 erfolgen. Die Steuerungs- und/oder Regelungseinrichtung 11 ist beispielsweise für eine Drehzahl- oder Lageregelung der elektrischen Maschine vorgesehen. Die Überprüfung der Gebersignale ist auch in bewegtem Zustand möglich. Je nach Ausführung der Anordnung wird spätestens nach einer Umdrehung ein Fehler aufgedeckt.

Es ist vorteilhaft, als zweiten Geber 7 lediglich einen einfachen zusätzlichen Sensor zu verwenden, da somit sowohl dem Überwachungserfordernis wie auch der Forderung nach einem einfachen Aufbau Rechnung getragen werden kann. Dieser zweite Geber 7 ist vorteilhafterweise derart ausgestaltbar, dass durch diesen lediglich ein Signal pro Umdrehung bereitgestellt werden muss. Eine Erkennung der Drehrichtung ist nicht in jedem Fall erforderlich. Prinzipiell reicht ein Flankenwechsel für eine Fehleraufdeckung auf.

In einer vorteilhaften Ausgestaltung der Erfindung wird vom zweiten Geber 7 ein mechanisches Teil abgetastet, welches bereits vorhanden ist. Dies ist z.B. bei einer Kupplung 15, welche Klauen 53 aufweist, der Fall. Die Klauen 53 sind vorteilhaft formschlüssig mit der Motorwelle 21 verbunden bzw. die Motorwelle 21 weist eine Kontur auf, welche mittels des zweiten Gebers 7 erkannt und abgetastet werden kann. Bei einer Abtastung der Motorwelle 21 durch den zweiten Geber 7 ist eine formschlüssige Verbindung zwischen der Antriebsseite 17 der Kupplung 15 und der Motorwelle 21 nicht notwendig, da eben die Motorwelle 21 selbst durch den zweiten Geber 7 abgetastet wird. Diese Ausführungsform ist in der Figur 1 nicht dargestellt, doch kann diese Ausführungsform leicht nachvollzogen werden, da eine entsprechende Kontur in der Motorwelle 21 einfach durch Riefen oder Nuten realisierbar ist.

In einer weiteren nicht dargestellten Ausführungsform ist der zweite Geber 7 in die elektrische Maschine selbst integriert. Dies bedeutet, dass der zweite Geber 7 sich nicht innerhalb des Gebergehäuses 8 wie dargestellt befindet, und somit abtriebsseitig bezüglich des Lagerschildes 31 subsumiert ist, sondern dass der zweite Geber 7 stich innerhalb des Gehäuses der elektrischen Maschine befindet, wobei ein Teil des Gehäuses der elektrischen Maschine durch das Lagerschild 31 ausgebildet ist.

Gemäß der Erfindung kann als Geber ein kapazitiv, induktiv, optisch, magnetisch, etc. arbeitender Geber verwendet werden. An welcher Position der zweite Geber 7 in oder an der elektrischen Maschine auch angebracht ist, es ist darauf zu achten, dass die Anbringung an einem Teil der elektrischen Maschine erfolgt, welche eine sichere mechanische Verbindung mit der Motorwelle 21 aufweist.

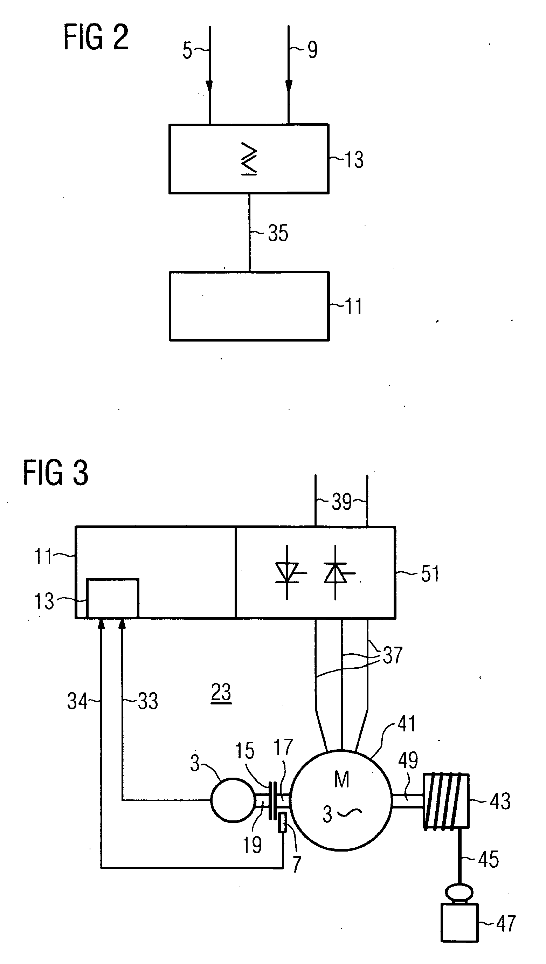

Die Darstellung gemäß Figur 2 zeigt einen Signalfluss der von dem ersten Geber 3 bzw. dem zweiten Geber 7 erzeugten Gebersignale 5 und 9. Das vom ersten Geber 3 erzeugte Gebersignal 5 wird in der Signalverarbeitungseinrichtung 13 mit dem vom zweiten Geber 7 erzeugten Gebersignal 9 verglichen. Überschreitet ein Differenzwert der Signale 5, 9 beispielsweise einen bestimmten Schwellwert, so kann ein Fehlersignal 35 an die Steuerungs- und/öder Regelungseinrichtung 11 weitergeleitet werden. Der Vergleich ist vorteilhafterweise auch innerhalb der Steuerungs- und/oder Regelungseinrichtung 11 selbst durchführbar, wenn die Gebersignale 5 und 9 direkt an die Steuerungs- und/oder Regelungseinrichtung 11 übertragen werden. Dies ist jedoch in Figur 2 nicht dargestellt. Abhängig von der Generierung eines Fehlersignals 35 ist beispielsweise das Einlegen einer Bremse oder einer Impulssperre bei einem Stromrichter durchführbar.

Die Darstellung gemäß Figur 3 zeigt einen Anwendungsfall für eine Antriebsvorrichtung, welche eine Überwachungseinrichtung 23 aufweist. Die Darstellung gemäß Figur 3 zeigt die Steuerungs- und/oder Regelungseinrichtung 11, welche zur Steuerung oder Regelung einer elektrischen Maschine 41 herangezogen wird. Die Steuerungs- und/oder Regelungseinrichtung 11 ist einem Leistungsteil 51 zugeordnet. Mittels des Leistungsteils 51 lässt sich ein Gleichspannungs-Zwischenkreis anbinden, wobei die Speisung der elektrischen Maschine 41 mittels eines dreiphasigen Drehstrom-Anschlusses 37 erfolgt. Die elektrische Maschine 41 ist zur Bewegung eines Gewichtes 47 vorgesehen, wobei das Gewicht 47 über ein Seil 45 an einer Seiltrommel 43 hängt. Die Seiltrommel 43 ist über eine Antriebswelle 49 mit der elektrischen Maschine 41 verbunden. Die Drehung der elektrischen Maschine 41 wird sowohl über den zweiten Geber 7 wie auch über den ersten Geber 3 überwacht. Die Überwachung ist insbesondere deswegen notwendig, da der erste Geber 3 über eine Kupplung 15 mit der elektrischen Maschine 41 verbunden ist. Sowohl der erste Geber 3 wie auch der zweite Geber 7 sind über ein Datenkabel 33, 34 mit der Steuerungs- und/oder Regelungseinrichtung 11 verbunden, wobei innerhalb der Steuerungs- und/oder Regelungseinrichtung 11 eine Signalverarbeitungseinrichtung 13 integriert ist, mittels derer der erste Geber 3 durch den zweiten Geber 7 überwacht werden kann.

In einer Ausführungsform, in welcher gemäß Figur 1 der erste Geber 3 und der zweite Geber 7 innerhalb eines gemeinsamen Gebergehäuses 8 integriert sind, ergibt sich der Vorteil, dass ein separater zweiter Geber nicht zusätzlich montiert werden muss, so dass dadurch Fehlerquellen reduziert werden. Außerdem ist es bei einer derartigen Ausführungsform nicht notwendig, dass von einem Anwender des Überwachungsverfahrens bzw. der Überwachungseinrichtung 11 rotatorische oder lineare Mittel zur Abtastung für den zweiten Geber 7 zur Verfügung gestellt werden müssen. Ein weiterer Vorteil der Integration innerhalb eines Gebergehäuses 8 besteht darin, dass in einfacher Weise eine hohe Schutzart realisierbar ist, bzw. dass nicht auch eine zusätzliche Verbindungstechnik vorzuhalten list.

## Patentansprüche

1. Überwachungseinrichtung für eine Antriebseinrichtung (1), wobei die Überwachungseinrichtung zur Überwachung einer Bewegung der Antriebseinrichtung (1) vorgesehen ist, wobei die Überwachungseinrichtung einen ersten Geber (3) und einen zweiten Geber (7) aufweist, wobei der zweite Geber (7) zur Überwachung des ersten Gebers (3) vorgesehen ist,
**dadurch gekennzeichnet, dass** der erste Geber (3) mittels einer Kupplung (15) mit einer Motorwelle (21) mechanisch gekuppelt ist, dass die Kupplung (15) eine Antriebsseite (17) und eine Abtriebsseite (19) aufweist und dass der erste Geber (3) der Abtriebsseite (19) der Kupplung (15) und der zweite Geber (7) der Antriebsseite (17) der Kupplung (15) zugeordnet ist.

2. Überwachungseinrichtung nach Anspruch 1,
**dadurch gekennzeichnet, dass** der erste Geber (3) eine Geberscheibe (4) aufweist und dass die Geberscheibe (4) mit einer Geberwelle (6) eine formschlüssige Verbindung aufweist.

3. Überwachungseinrichtung nach Anspruch 1 oder 2,
**dadurch gekennzueichnet, dass** ein vom ersten Geber (3) abgegebenes Gebersignal (5) eine höhere Genauigkeit aufweist als ein vom zweiten Geber (7) abgegebenes Gebersignal (9).

4. Überwachungseinrichtung nach einem der Ansprüche 1 bis 3,
**dadurch gekennzeiehnet, dass** die Antriebsseite (17) der Kupplung (15) mit einer Motorwelle (21) eine formschlüssige Verbindung aufweist.

5. Überwachungseinrichtung nach einem der Ansprüche 1 bis 4,
**dadurch gekennzeichnet, dass** der erste Geber (3) und der zweite Geber (7) ein gemeinsames Gebergehäuse (8) aufweisen.

## Claims

1. Monitoring device for a drive device (1), wherein the monitoring device is provided for monitoring a movement of the drive device (1), wherein the monitoring device has a first sensor (3) and a second sensor (7), with the second sensor (7) being provided for monitoring the first sensor (3),
**characterised in that** the first sensor (3) is mechanically coupled to a motor shaft (21) by means of a coupling (15), **in that** the coupling (15) has a driving side (17) and a driven side (19), and **in that** the first sensor (3) is assigned to the driven side (19) of the coupling (15) and the second sensor (7) to the driving side (17) of the coupling (15).

2. Monitoring device according to claim 1,
**characterised in that** the first sensor (3) has a sensor disc (4) and **in that** the sensor disc (4) is linked to a sensor shaft (6) by means of a form-fit connection.

3. Monitoring device according to claim 1 or 2,
**characterised in that** a sensor signal (5) output by the first sensor (3) has a greater accuracy than a sensor signal (9) output by the second sensor (7).

4. Monitoring device according to one of claims 1 to 3,
**characterised in that** the driving side (17) of the coupling (15) is linked to a motor shaft (21) by means of a form-fit connection.

5. Monitoring device (23) according to one of claims 1 to 4,
**characterised in that** the first sensor (3) and the second sensor (7) have a common sensor housing (8).

## Revendications

1. Dispositif de contrôle d'un dispositif ( 1 ) d'entraînement, dans lequel le dispositif de contrôle est prévu pour le contrôle d'un mouvement du dispositif ( 1 ) d'entraînement, le dispositif de contrôle ayant un premier émetteur ( 3 ) et un deuxième émetteur ( 7 ), le deuxième émetteur ( 7 ) étant prévu pour contrôler le premier émetteur ( 3 ),
**caractérisé en ce que** le premier émetteur ( 3 ) est couplé mécaniquement à un arbre ( 21 ) de moteur au moyen d'un accouplement ( 15 ), **en ce que** l'accouplement ( 15) a un côté ( 17 ) menant et un côté ( 19 ) mené et **en ce que** le premier émetteur ( 3 ) est associé au côté ( 19 ) mené de l'accouplement ( 15 ) et le deuxième émetteur (7) au côté ( 17 ) menant de l'accouplement ( 15 ).

2. Dispositif de contrôle suivant la revendication 1,
**caractérisé en ce que** le premier émetteur ( 3 ) a un disque ( 4 ) d'émetteur et **en ce que** le disque ( 4 ) d'émetteur a une liaison par complémentarité de forme avec un arbre ( 6 ) d'émetteur.

3. Dispositif de contrôle suivant la revendication 1 ou 2,
**caractérisé en ce qu'**un signal ( 5 ) d'émetteur émis par le premier émetteur ( 3 ) a une précision plus grande qu'un signal ( 9 ) d'émetteur émis par le deuxième émetteur ( 7 ).

4. Dispositif de contrôle suivant l'une des revendications 1 à 3,
**caractérisé en ce que** le côté ( 17 ) menant de l'accouplement ( 15 ) a une liaison par complémentarité de forme avec un arbre ( 21 ) de moteur.

5. Dispositif de contrôle suivant l'une des revendications 1 à 4,
**caractérisé en ce que** le premier émetteur ( 3 ) et le deuxième émetteur ( 7 ) ont un boîtier ( 8 ) commun d'émetteur.
